# EUROPEAN PATENT SPECIFICATION

(11) **EP 4 243 120 B1**
(45) Date of publication and mention of the grant of the patent: **07.10.2026**
(21) Application number: 22899635.1
(22) Date of filing: 14.01.2022
(51) Int. Cl.: H01M 4/38, H01M 4/48, H01M 4/62, H01M 4/04, H01M 4/134, H01M 10/0525, H01M 4/36, H01M 4/02

(54) **COMPOSITE MATERIAL IN YOLK/CORE-SHELL STRUCTURE, PREPARATION METHOD, AND SECONDARY BATTERY CONTAINING COMPOSITE MATERIAL IN YOLK/CORE-SHELL STRUCTURE**
VERBUNDSTOFF MIT EIGELBKERNSCHALENSTRUKTUR, HERSTELLUNGSVERFAHREN DAFÜR UND SEKUNDÄRBATTERIE DAMIT
MATÉRIAU COMPOSITE DANS UNE STRUCTURE JAUNE/NOYAU-COQUE, PROCÉDÉ DE PRÉPARATION ET BATTERIE SECONDAIRE CONTENANT UN MATÉRIAU COMPOSITE DANS UNE STRUCTURE JAUNE/NOYAU-COQUE

(43) Date of publication of application: 13.09.2023
(73) Proprietor: Contemporary Amperex Technology (Hong Kong) Limited, Central, Central And Western District (HK)
(72) Inventor: XIA, Zhiyu, Ningde City, Fujian 352100 (CN); MA, Yunjian, Ningde City, Fujian 352100 (CN); LIN, Mingfeng, Ningde City, Fujian 352100 (CN); CHEN, Bing, Ningde City, Fujian 352100 (CN); HUANG, Yuping, Ningde City, Fujian 352100 (CN); ZHANG, Jianping, Ningde City, Fujian 352100 (CN); LI, Yanhui, Ningde City, Fujian 352100 (CN); LIU, Yumeng, Ningde City, Fujian 352100 (CN)
(74) Representative: Jacob, Reuben Ellis
(86) International application number: PCT/CN2022/072073
(87) International publication number: WO 2023/133814

(56) References cited:
- AU-A4- 2020 101 077
- CN-A- 102 800 851
- CN-A- 103 367 719
- CN-A- 106 159 213
- CN-A- 110 504 413
- CN-A- 113 193 195
- CN-A- 113 193 195
- CN-A- 113 644 238
- CN-A- 113 644 238
- JP-A- 2012 033 317
- US-A1- 2021 114 886

## Description

### TECHNICAL FIELD

This application relates to the field of lithium-ion batteries, and in particular, to a yolk core-shell structured composite material, a preparation method of the material, and a secondary battery containing the material.

### BACKGROUND

Lithium-ion batteries are widely applied by virtue of a high energy density, environment-friendliness, no memory effect, and other merits. With a theoretical gram capacity as high as 4200 mAh/g, a silicon-based negative electrode material is considered to be the most promising negative electrode material of the lithium-ion batteries.

A capacity fades rapidly during cycling due to volume expansion caused by a silicon material during charging and discharging, thereby impairing a capacity retention rate of the lithium-ion batteries. In addition, poor conductivity of the silicon material results in a low practical capacity of the lithium-ion batteries.

### SUMMARY

This application is made in view of the foregoing problems, and an objective of this application is to improve a capacity and a capacity retention rate of a lithium-ion battery.

To achieve such an objective, this application provides a yolk core-shell structured composite material, a preparation method of the material, and a secondary battery containing the material.

A first aspect of this application provides a yolk core-shell structured composite material, including a core and a shell. A cavity exists between the core and the shell. The core includes a phosphorus-doped silicon material, and the shell includes a nitrogen-doped carbon material.

Therefore, with a cavity disposed between the core and the shell, the cavity can accommodate volume expansion of the phosphorus-doped silicon material in the core during electrochemical cycling, thereby improving electrochemical cycle stability of the yolk core-shell structured composite material, and increasing the capacity retention rate of a lithium-ion battery. In addition, an n-type semiconductor is made by doping the silicon material of the core with phosphorus, and a p-type semiconductor is made by doping the carbon material of the shell with nitrogen, thereby improving electron transfer efficiency in yolk core-shell structured composite material, and increasing a practical capacity of the lithium-ion battery.

In any embodiment, Dᵥ₅₀ of the yolk core-shell structured composite material is 3 to 7 µm, and preferably 3 to 4 µm. Dᵥ₅₀ of the core is 2.7 to 6.8 µm, and preferably 2.7 to 3.8 µm. An average thickness of the shell is 5 to 20 nm, and preferably 8 to 12 nm. A maximum distance between an outer wall of the core and an inner wall of the shell is 5 to 300 nm, and preferably 50 to 150 nm. By controlling the Dᵥ₅₀ of the yolk core-shell structured composite material, the Dᵥ₅₀ of the core, the average thickness of the shell, and the maximum distance between the outer wall of the core and the inner wall of the shell to fall within the foregoing ranges, this application improves the practical capacity of the lithium-ion battery, without agglomerating the yolk core-shell structured composite material.

In any embodiment, the yolk core-shell structured composite material includes mesopores with an average pore diameter of 3 to 10 nm. The mesopores with an average pore diameter of 3 to 10 nm in the yolk core-shell structured composite material can increase a contact area between the yolk core-shell structured composite material and an electrolytic solution, improve the transfer efficiency of lithium ions, increase electrochemical reaction active sites, and increase the practical capacity of the lithium-ion battery.

In any embodiment, a mass percent of phosphorus in the phosphorus-doped silicon material of the yolk core-shell structured composite material is 0.1% to 3%, and a mass percent of nitrogen in the nitrogen-doped carbon material is 0.1% to 2%. When the doping percent of phosphorus in the phosphorus-doped silicon material is controlled to fall within the foregoing range, the doping phosphorus can increase the concentration of free electrons in the silicon material and improve the electron transfer efficiency, thereby improving the electrical conductivity of the silicon material and increasing the practical capacity of the lithium-ion battery. When the doping percent of nitrogen in the nitrogen-doped carbon material is controlled to fall within the foregoing range, the doping nitrogen can improve the electron transfer efficiency between the shell and the phosphorus-doped silicon material in the core, thereby increasing the practical capacity of the lithium-ion battery.

In any embodiment, the silicon material in the yolk core-shell structured composite material is at least one selected from silicon, silicon monoxide, and silicon dioxide. When the silicon material used in this application as a raw material of the negative electrode material is at least one selected from the foregoing materials, the silicon material has advantages such as a high capacity, high performance, and cost-effectiveness of the raw material.

A second aspect of this application further provides a method for preparing a yolk core-shell structured composite material. The preparation method includes: mixing SiO and a phosphorus source well, and then calcining the mixed product to obtain P-doped Si/SiO₂ composite particles; applying a nitrogen source as a coating onto surfaces of the P-doped Si/SiO₂ composite particles to obtain nitrogen-coated P-doped Si/SiO₂; calcining the nitrogen-coated P-doped Si/SiO₂ to obtain a P-doped Si/SiO₂ composite material that is coated with N-doped C; and etching, by using a hydrofluoric acid solution, the P-doped Si/SiO₂ composite material that is coated with the N-doped C, to obtain a P-doped Si composite material that is coated with the N-doped C.

Therefore, by employing the P-doped Si and the N-doped C, this application can improve the electron transfer efficiency in the yolk core-shell structured composite material, thereby increasing the practical capacity of the lithium-ion battery. By etching away SiO₂ by use of the hydrofluoric acid solution, a relatively large cavity structure is formed between the core and the shell. The cavity structure can accommodate the volume expansion of the phosphorus-doped silicon material during electrochemical cycling, thereby improving the electrochemical cycle stability of the yolk core-shell structured composite material and increasing the capacity retention rate of the lithium-ion battery.

In any embodiment, the phosphorus source is at least one selected from in P₂O₅, NaH₂PO₂, phytic acid, and triphenylphosphine; and the nitrogen source is at least one selected from pyrrole, melamine, urea, and dopamine. In this application, the foregoing materials are used as the phosphorus source and the nitrogen source respectively, and therefore, the silicon material can be uniformly doped with phosphorus, and the carbon material can be uniformly doped with nitrogen, with the raw materials being cost-effective.

In any embodiment, in the method for preparing a yolk core-shell structured composite material, a mass ratio between the SiO and the phosphorus source is (5 to 50): 1. In this application, by controlling the mass ratio between the SiO and the phosphorus source to fall within the range of (5 to 50): 1, the doping percent of phosphorus falls within a desired range to improve the electron transfer efficiency and increase the practical capacity of the lithium-ion battery.

In any embodiment, in the method for preparing a yolk core-shell structured composite material, during the calcination of the product of well mixing the SiO and the phosphorus source, a calcination temperature is 500 °C to 1200 °C, a calcination time is 1 to 10 hours, and the calcination is performed in an inert atmosphere. By controlling the calcination temperature and the calcination time to fall within the foregoing ranges, the doping percent of phosphorus can be caused to fall within a desired range, and the uniformity of the doping phosphorus can be improved. The calcination performed in the inert atmosphere can prevent foreign matters from entering the calcination product.

In any embodiment, in the method for preparing a yolk core-shell structured composite material, a ratio of an amount of substance of the nitrogen source to a mass of the P-doped Si/SiO₂ composite particles is (0.001 to 0.1) mmol: 100 mg. By controlling the ratio of an amount of substance of the nitrogen source to a mass of the P-doped Si/SiO₂ composite particles to fall within the foregoing range, the coating amount of the nitrogen source can be caused to fall within a desirable range.

In any embodiment, in the method for preparing a yolk core-shell structured composite material, the applying a nitrogen source as a coating onto surfaces of the P-doped Si/SiO₂ composite particles includes: adding the P-doped Si/SiO₂ composite particles and a surfactant into water; adding a nitrogen source dispersion solution and an initiator in sequence under conditions of continuous agitation and ice bath after the surfactant is dissolved; and keeping vibrating under a condition of ice bath. By coating the surfaces of the P-doped Si/SiO₂ composite particles with a nitrogen source in the way described above, the surfaces of the P-doped Si/SiO₂ composite particles are coated with the nitrogen source uniformly.

In any embodiment, in the method for preparing a yolk core-shell structured composite material, a concentration of the nitrogen source dispersion solution is 0.01 to 1 mol/L. By controlling the concentration of the nitrogen source dispersion solution to fall within the foregoing range, the coating uniformity of the nitrogen source is improved, and the coating amount is increased.

In any embodiment, in the method for preparing a yolk core-shell structured composite material, during the calcination of the nitrogen-coated P-doped Si/SiO₂, a calcination temperature is 200 °C to 800 °C, a calcination time is 1 to 5 hours, and the calcination is performed in an inert atmosphere. By controlling the calcination temperature and the calcination time to fall within the foregoing ranges, it is ensured that the nitrogen source as a coating can be thoroughly carbonized into N-doped C, the coating amount of the N-doped C can be controlled to fall within a desirable range, and the uniformity of the N-doped C coating is improved. The calcination performed in the inert atmosphere can prevent foreign matters from entering the calcination product.

In any embodiment, in the method for preparing a yolk core-shell structured composite material, a mass percent of the hydrofluoric acid solution is 5 wt% to 50 wt%. By controlling the mass percent of the hydrofluoric acid solution to fall within the foregoing range, the SiO₂ can be etched away, and a relatively large cavity structure can be formed.

In any embodiment, in the method for preparing a yolk core-shell structured composite material, an etching time of the etching by using a hydrofluoric acid solution is 5 to 60 minutes. By controlling the etching time to fall within the foregoing range, the amount of the SiO₂ etched away can be caused to fall within a desirable range, so as to form a cavity structure of an appropriately moderate size.

A third aspect of this application provides a secondary battery. The secondary battery includes the yolk core-shell structured composite material according to the first aspect of this application or a yolk core-shell structured composite material prepared by the method according to the second aspect of this application.

A fourth aspect of this application provides a battery module. The battery module includes the secondary battery according to the third aspect of this application.

A fifth aspect of this application provides a battery pack. The battery pack includes the battery module according to the fourth aspect of this application.

A sixth aspect of this application provides an electrical device. The electrical device includes at least one of the secondary battery according to the third aspect of this application, the battery module according to the fourth aspect of this application, or the battery pack according to the fifth aspect of this application.

Beneficial effects of this application are as follows:
In the yolk core-shell structured composite material according to this application, with a cavity disposed between the core and the shell, the cavity can accommodate volume expansion of the phosphorus-doped silicon material in the core during electrochemical cycling, thereby improving electrochemical cycle stability of the yolk core-shell structured composite material, and increasing the capacity retention rate of the lithium-ion battery. In addition, by doping the silicon material in the core with phosphorus, this application improves electron transfer efficiency and increases the practical capacity of the lithium-ion battery.

### BRIEF DESCRIPTION OF DRAWINGS

FIG. 1 is a schematic structural diagram of a yolk core-shell structured composite material;
FIG. 2 is a schematic diagram of change occurring after a plurality of cycles of silicon particles;
FIG. 3 is a schematic diagram of change occurring after a plurality of cycles of a carbon-shell coated silicon particle material;
FIG. 4 is a schematic diagram of change occurring after a plurality of cycles of a yolk core-shell structured composite material;
FIG. 5 is a schematic diagram of lithiation and delithiation of a yolk core-shell structured composite material;
FIG. 6 is a schematic flowchart of preparing a yolk core-shell structured composite material;
FIG. 7 is a schematic diagram of a secondary battery according to an embodiment of this application;
FIG. 8 is an exploded view of a secondary battery shown in FIG. 7 according to an embodiment of this application;
FIG. 9 is a schematic diagram of a battery module according to an embodiment of this application;
FIG. 10 is a schematic diagram of a battery pack according to an embodiment of this application;
FIG. 11 is an exploded view of the battery pack shown in FIG. 10 according to an embodiment of this application; and
FIG. 12 is a schematic diagram of an electrical device that uses a secondary battery as a power supply according to an embodiment of this application.
FIG. 13 is a transmission electron microscope image of a yolk core-shell structured composite material prepared in Embodiment 1; and
FIG. 14 is a pore size distribution graph of mesopores of a yolk core-shell structured composite material prepared in Embodiment 1.

### Reference numerals:

11 core; 12 shell; 13 cavity; 14 mesopore; 21 silicon particle; 22 carbon shell; 31 phosphorus-doped LiₓSi alloy; 15 solid electrolyte interphase film; 41 amorphous-phosphorus doped silicon; 1 battery pack; 2 upper box; 3 lower box; 4 battery module; 5 secondary battery; 51 housing; 52 electrode assembly; 53 cover plate

### DETAILED DESCRIPTION OF EMBODIMENTS

The following describes and discloses in detail a yolk core-shell structured composite material, a preparation method of the material, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, any one of the following conditions satisfies the condition "A or B" : A is true (or existent) and B is false (or absent); A is false (or absent) and B is true (or existent); and, both A and B are true (or existent).

In the process of researching lithium-ion batteries, the applicant hereof finds that, the capacity fades rapidly during cycling due to volume expansion caused by a silicon material during charging and discharging, thereby impairing the capacity retention rate of the lithium-ion batteries and being hardly able to meet requirements in practical applications. In addition, the silicon material itself is of a low conductivity, so that a practical capacitance of the silicon material is relatively low.

To improve the capacity retention rate and the practical capacity of a lithium-ion battery and achieve higher performance such as a longer cruising range and a longer service life of the lithium-ion battery applied in an electrical device, this application provides a yolk core-shell structured composite material, a preparation method of the material, and a secondary battery containing the material.

The yolk core-shell structured composite material according to this application may be applied in a secondary battery. The secondary battery may be applied in, but without being limited to, electrical devices such as a vehicle, watercraft, or aircraft. A power supply system of the electrical devices may be made up by using the secondary battery and the like disclosed in this application, so as to increase the capacity retention rate and the practical capacity of the secondary battery.

This application provides an electrical device that uses a secondary battery as a power supply. The electrical device may be, but without being limited to, a mobile phone, a tablet, a notebook computer, an electric toy, an electric tool, an electric power cart, an electric vehicle, a ship, a spacecraft, and the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

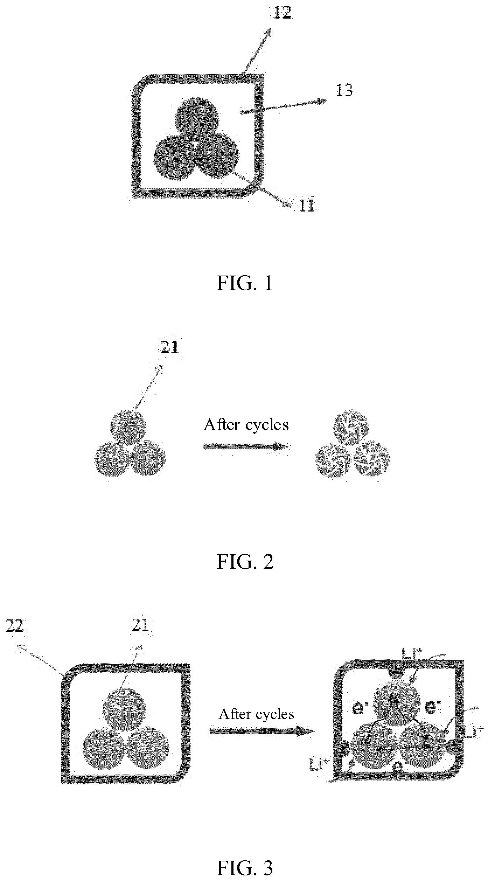

In an embodiment of this application, this application discloses a yolk core-shell structured composite material. As shown in FIG. 1, the structure of the material includes a core 11 and a shell 12. A cavity 13 exists between the core 11 and the shell 12. The core 12 includes a phosphorus-doped silicon material, and the shell 12 includes a nitrogen-doped carbon material.

The applicant hereof finds that, with a cavity disposed between the core and the shell, this application makes the cavity able to accommodate volume expansion of the phosphorus-doped silicon material in the core during electrochemical cycling, thereby improving electrochemical cycle stability of the yolk core-shell structured composite material, increasing the capacity retention rate of the lithium-ion battery, and improving the rate performance of the lithium-ion battery. In addition, an n-type semiconductor made by doping the silicon material of the core with phosphorus can increase the concentration of free electrons in the material and improve the electron transfer efficiency between silicon particles, thereby increasing the conductivity of the silicon material and the practical capacity of the lithium-ion battery. Further, a p-type semiconductor made by doping the carbon material of the shell with nitrogen improves the electron transfer efficiency between the shell and the phosphorus-doped silicon material in the core, thereby increasing the practical capacity of the lithium-ion battery.

FIG. 2 is a schematic diagram of change occurring after a plurality of cycles of silicon particles. As shown in FIG. 2, after a plurality of cycles, the silicon particles 21 are prone to be pyrolyzed.

FIG. 3 is a schematic diagram of change occurring after a plurality of cycles of a carbon-shell coated silicon particle material. As shown in FIG. 3, the carbon-shell coated silicon particle material includes silicon particles 21 and a carbon shell 22. After a plurality of cycles, the silicon particles are not pyrolyzed, and some free electrons exist between the silicon particles.

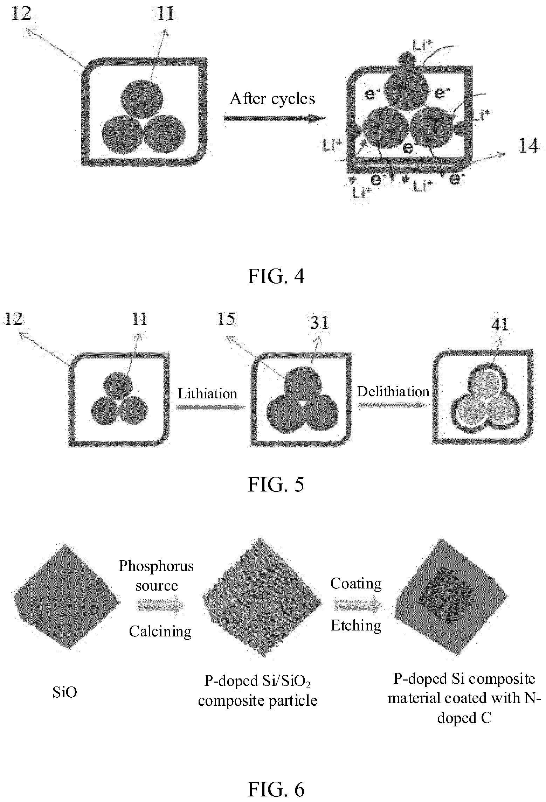

FIG. 4 is a schematic diagram of change occurring after a plurality of cycles of a yolk core-shell structured composite material. As shown in FIG. 4, the material includes phosphorus-doped silicon core 11 and a nitrogen-doped carbon shell 12. The surface of the nitrogen-doped carbon shell 12 includes mesopores 14. After a plurality of cycles, the phosphorus-doped silicon core is not pyrolyzed, and a relatively large amount of free electrons exist between the phosphorus-doped silicon particles.

FIG. 5 is a schematic diagram of lithiation and delithiation of a yolk core-shell structured composite material. As shown in FIG. 5, during lithiation, the phosphorus-doped silicon core 11 is transformed into a phosphorus-doped LiₓSi alloy 31. The outer surface of the phosphorus-doped LiₓSi alloy 31 is coated with a solid electrolyte interphase (SEI) film 15. During delithiation, the phosphorus-doped LiₓSi alloy 31 is transformed into amorphous phosphorus-doped silicon 41.

In some embodiments, Dᵥ₅₀ of the yolk core-shell structured composite material is 3 to 7 □m, and preferably 3 to 4 □m. Dᵥ₅₀ of the core is 2.7 to 6.8 □m, and preferably 2.7 to 3.8 □m. An average thickness of the shell is 5 to 20 nm, and preferably 8 to 12 nm. A maximum distance between an outer wall of the core and an inner wall of the shell is 5 to 300 nm, and preferably 50 to 150 nm. The Dv50 referred to herein means a particle diameter corresponding to a cumulative volume distribution percentage 50% in a volume-based particle size distribution.

The applicant hereof finds that, by controlling the Dᵥ₅₀ of the yolk core-shell structured composite material to fall within the range of 3 to 7 □m, the practical capacity of the lithium-ion battery can be increased to a relatively large extent, without agglomerating the yolk core-shell structured composite material. If the Dᵥ₅₀ of the yolk core-shell structured composite material is relatively high, the exertion of the capacity will be affected adversely, thereby reducing the practical capacity of the lithium-ion battery. If the Dᵥ₅₀ of the yolk core-shell structured composite material is relatively low, the yolk core-shell structured composite material is prone to agglomerate, thereby impairing the overall performance of the lithium-ion battery. When the Dᵥ₅₀ of the yolk core-shell structured composite material is controlled to fall within the desirable range of 3 to 4 □m, the exertion of capacity of the yolk core-shell structured composite material is optimized without agglomeration, thereby improving the overall performance of the lithium-ion battery.

By controlling the Dᵥ₅₀ of the core in the yolk core-shell structured composite material to fall within the range of 2.7 to 6.8 □m, the practical capacity of the lithium-ion battery can be increased to a relatively large extent, without agglomerating the yolk core-shell structured composite material. The value of Dᵥ₅₀ of the core directly affects the value of Dᵥ₅₀ of the yolk core-shell structured composite material. If the Dᵥ₅₀ of the core is relatively high, the exertion of the capacity will be affected adversely, thereby reducing the practical capacity of the lithium-ion battery. If the Dᵥ₅₀ of the core is relatively low, the Dᵥ₅₀ of the yolk core-shell structured composite material will be relatively low accordingly, and the yolk core-shell structured composite material will be prone to agglomerate, thereby impairing the overall performance of the lithium-ion battery. When the Dᵥ₅₀ of the core is controlled to fall within the desirable range of 2.7 to 3.8 □m, the exertion of capacity of the yolk core-shell structured composite material is optimized without agglomeration, thereby improving the overall performance of the lithium-ion battery.

By controlling the average thickness of the shell in the yolk core-shell structured composite material to fall within a range of 5 to 20 nm, this application can reduce the risk of rupturing the shell during the volume expansion of the phosphorus-doped silicon material, improve the electrochemical cycle stability of the yolk core-shell structured composite material, increase the capacity retention rate of the lithium-ion battery, and at the same time, reduce the impact on the transfer efficiency of lithium ions, and increase the practical capacity. The higher the values of Dᵥ₅₀ of the yolk core-shell structured composite material and Dᵥ₅₀ of the core, the thicker the shell. If the average thickness of the shell is relatively large, the transfer efficiency of lithium ions will be impaired, and the practical capacity will be reduced. If the average thickness of the shell is relatively small, that is, the shell is excessively thin, the shell is prone to rupture during the volume expansion of the phosphorus-doped silicon material. By controlling the average thickness of the shell to fall within the desirable range of 8 to 12 nm, this application can further achieve a desirable trade-off between reduction of the risk of rupturing the shell during the volume expansion of the phosphorus-doped silicon material and alleviation of the impact on the transfer efficiency of lithium ions, thereby improving the overall performance of the lithium-ion battery.

By controlling the maximum distance between the outer wall of the core and the inner wall of the shell in the yolk core-shell structured composite material to fall within a range of 5 to 300 nm, this application can well accommodate the volume expansion of the phosphorus-doped silicon material during electrochemical cycling, thereby improving the electrochemical cycle stability of the yolk core-shell structured composite material, increasing the capacity retention rate of the lithium-ion battery, improving the rate performance of the lithium-ion battery, and at the same time, minimizing the impact caused by the large distance between the core and the shell onto the electron transfer efficiency, and improving the practical capacity of the lithium-ion battery. The maximum distance between the outer wall of the core and the inner wall of the shell is related to the Dᵥ₅₀ of the yolk core-shell structured composite material and the Dᵥ₅₀ of the core. When the Dᵥ₅₀ of the yolk core-shell structured composite material and the Dᵥ₅₀ of the core are higher, the maximum distance between the outer wall of the core and the inner wall of the shell needs to become larger accordingly so as to improve the capability of withstanding the volume expansion. If the maximum distance between the outer wall of the core and the inner wall of the shell is relatively large, the electron transfer efficiency will be affected adversely. If an additional conductive agent is added to connect the outer wall of the core and the inner wall of the shell, the structure of the material will be more complicated and the production cost will be increased. By controlling the maximum distance between the outer wall of the core and the inner wall of the shell to fall within the desirable range of 50 to 150 nm, this application can further achieve a desirable trade-off between the capability of withstanding the volume expansion of the phosphorus-doped silicon material and the impact on the electron transfer efficiency, thereby improving the overall performance of the lithium-ion battery.

In some embodiments, the yolk core-shell structured composite material includes mesopores with an average pore diameter of 3 to 10 nm. The mesopores are mainly located in the shell. The mesopores with an average pore diameter of 3 to 10 nm disposed in the surface of the shell in the yolk core-shell structured composite material can increase a contact area between the yolk core-shell structured composite material and an electrolytic solution, improve the transfer efficiency of lithium ions, further increase electrochemical reaction active sites, and increase the practical capacity of the lithium-ion battery. If the pore diameter of the mesopores is relatively large, the shell is prone to rupture during the volume expansion of the phosphorus-doped silicon material. If the pore diameter of the mesopores is relatively small, the transfer efficiency of lithium ions will be reduced.

In some embodiments, a mass percent of phosphorus in the phosphorus-doped silicon material is 0.1% to 3%. By controlling the doping percent of phosphorus in the phosphorus-doped silicon material to fall within the foregoing range, the added phosphorus can increase the concentration of free electrons in the silicon material and improve the electron transfer efficiency, thereby increasing the conductivity of the silicon material and the practical capacity of the lithium-ion battery. If the doping percent of phosphorus is relatively low, the effect of improving the electron transfer efficiency is limited. If the doping percent of phosphorus is relatively high, not only waste of raw materials will be caused, but also the proportion of silicon in the yolk core-shell structured composite material will be reduced, and the capacity of the lithium-ion battery will be reduced.

In some embodiments, a mass percent of nitrogen in the nitrogen-doped carbon material is 0.1% to 2%. By controlling the doping percent of nitrogen in the nitrogen-doped carbon material to fall within the foregoing range, this application can improve the electron transfer efficiency between the shell and the phosphorus-doped silicon material in the core, thereby increasing the practical capacity of the lithium-ion battery. If the doping percent of nitrogen is relatively low, the effect of improving the electron transfer efficiency between the shell and the phosphorus-doped silicon material in the core is limited. If the doping percent of nitrogen is relatively high, not only waste of raw materials will be caused, but also the proportion of silicon in the yolk core-shell structured composite material will be reduced, and the capacity of the lithium-ion battery will be reduced.

In some embodiments, the silicon material is at least one selected from silicon, silicon monoxide, and silicon dioxide. When the silicon material used in this application as a raw material of the negative electrode material is at least one selected from the foregoing materials, the silicon material has advantages such as a high capacity, high performance, and cost-effectiveness of the raw material.

In an embodiment of this application, this application discloses a method for preparing a yolk core-shell structured composite material. As shown in FIG. 6, the preparation process includes the following steps:
(1) Mix SiO and a phosphorus source well, and then calcine the mixed product to obtain P-doped Si/SiO₂ composite particles;
(2) Apply a nitrogen source as a coating onto surfaces of the P-doped Si/SiO₂ composite particles to obtain nitrogen-coated P-doped Si/SiO₂;
(3) Calcine the nitrogen-coated P-doped Si/SiO₂ to obtain a P-doped Si/SiO₂ composite material that is coated with N-doped C; and
(4) Etch, by using a hydrofluoric acid solution, the P-doped Si/SiO₂ composite material that is coated with the N-doped C, to obtain a P-doped Si composite material that is coated with the N-doped C.

Therefore, by employing the P-doped Si and the N-doped C, this application can improve the electron transfer efficiency in the yolk core-shell structured composite material, thereby increasing the practical capacity of the lithium-ion battery. By etching away SiO₂ by use of the hydrofluoric acid solution, a relatively large cavity structure is formed between the core and the shell. The cavity structure can accommodate the volume expansion of the phosphorus-doped silicon material during electrochemical cycling, thereby improving the electrochemical cycle stability of the yolk core-shell structured composite material and increasing the capacity retention rate of the lithium-ion battery.

In some embodiments, the phosphorus source is at least one selected from in P₂O₅, NaH₂PO₂, phytic acid, and triphenylphosphine; and the nitrogen source is at least one selected from pyrrole, melamine, urea, and dopamine. The types of the phosphorus source and the nitrogen source are not limited in this application, as long as the objectives of this application can be achieved. The foregoing materials are used as the phosphorus source and the nitrogen source respectively, and therefore, the Si/SiO₂ composite particle material can be uniformly doped with phosphorus, or the carbon material can be uniformly doped with nitrogen, with the raw materials being cost-effective.

As an example, the phosphorus source is P₂O₅, and the nitrogen source is pyrrole. Therefore, in preparing a core according to this application, P₂O₅ is added into SiO to form a mixture, and the mixture is calcined so that the SiO reacts disproportionately to form a P-doped Si/SiO₂ composite particle core. An n-type semiconductor is made by doping the core with phosphorus, so as to increase the concentration of free electrons and improve the electron transfer efficiency between silicon particles, and in turn, increase the conductivity of the silicon material and the practical capacity of the lithium-ion battery. The pyrrole monomer is self-polymerized on the surface of P-doped Si/SiO₂ composite particles, so that the surfaces of the P-doped Si/SiO₂ composite particles are coated with the nitrogen-doped carbon material, and form a nitrogen-doped carbon shell after being calcined. A p-type semiconductor is made by doping the shell with nitrogen, so as to improve the electron transfer efficiency between the shell and the phosphorus-doped silicon in the core, and in turn, increase the practical capacity of the lithium-ion battery. In addition, through the calcination process, mesopores can be formed on the surface of the shell, thereby increasing the contact area between the yolk core-shell structured composite material and the electrolytic solution, improving the transfer efficiency of lithium ions, further increasing the electrochemical reaction active sites, and increasing the practical capacity of lithium-ion batteries. When the P-doped Si/SiO₂ composite material coated with the N-doped C is etched by using a hydrofluoric acid solution, the SiO₂ can be etched away. In this way, a relatively large cavity structure is formed between the core and the shell. The cavity structure can accommodate the volume expansion of the phosphorus-doped silicon material during electrochemical cycling, thereby improving the electrochemical cycle stability of the yolk core-shell structured composite material and increasing the capacity retention rate of the lithium-ion battery.

In some embodiments, a mass ratio between the SiO and the phosphorus source is (5 to 50): 1. In this application, by controlling the mass ratio between the SiO and the phosphorus source to fall within the range of (5 to 50): 1, the doping percent of phosphorus falls within a desired range to improve the electron transfer efficiency, increase the conductivity of the silicon material, and in turn, increase the practical capacity of the lithium-ion battery. If the mass ratio between the SiO and the phosphorus source is relatively low, the doping percent of phosphorus will be relatively low, and the effect of improving the electron transfer efficiency is limited. If the mass ratio between the SiO and the phosphorus source is relatively high, not only waste of raw materials will be caused, but also the proportion of silicon in the yolk core-shell structured composite material will be reduced, and the capacity of the lithium-ion battery will be reduced.

In some embodiments, during the calcination of the product of well mixing the SiO and the phosphorus source, the calcination temperature is 500 °C to 1200 °C, the calcination time is 1 to 10 hours, and the calcination is performed in an inert atmosphere such as argon or nitrogen. Without being limited to any theory, by controlling the calcination temperature and the calcination time to fall within the foregoing ranges, the doping percent of phosphorus can be caused to fall within a desired range, and the uniformity of the doping phosphorus can be improved. The calcination performed in the inert atmosphere can prevent foreign matters from entering the calcination product.

In some embodiments, a ratio of an amount of substance of the nitrogen source to a mass of the P-doped Si/SiO₂ composite particles is (0.001 to 0.1) mmol: 100 mg. Without being limited to any theory, by controlling the ratio of an amount of substance of the nitrogen source to a mass of the P-doped Si/SiO₂ composite particles to fall within the foregoing range, the coating amount of the nitrogen source can be caused to fall within a desirable range.

In some embodiments, the step of coating the surfaces of the P-doped Si/SiO₂ composite particles with a nitrogen source includes: adding the P-doped Si/SiO₂ composite particles and a surfactant into water; adding a nitrogen source dispersion solution and an initiator in sequence under conditions of continuous agitation and ice bath after the surfactant is dissolved; and keeping vibrating under a condition of ice bath. Without being limited to any theory, by coating the surfaces of the P-doped Si/SiO₂ composite particles with a nitrogen source in the way described above, the surfaces of the P-doped Si/SiO₂ composite particles are coated with the nitrogen source uniformly.

As an example, the nitrogen source is pyrrole. In this case, a pyrrole monomer dispersion solution is a solution formed by dispersing a pyrrole monomer into a dispersant. The type of the dispersant is not limited in this application, as long as the objectives of this application can be achieved. For example, the dispersant is selected from ethanol.

The type of the surfactant is not limited in this application, as long as the objectives of this application can be achieved. For example, the surfactant is selected from sodium dodecyl sulfonate.

The type of the initiator is not limited in this application, as long as the objectives of this application can be achieved. As an example, the initiator is an ammonium persulfate solution. The solvent of the ammonium persulfate solution is water. The ammonium persulfate solution can induce the nitrogen source to self-polymerize on the surfaces of the P-doped Si/SiO₂ composite particles. The dosage and the concentration of the ammonium persulfate solution are not limited in this application, as long as the objectives of this application can be achieved. For example, a volume ratio between the ammonium persulfate solution and the nitrogen source dispersion solution is (1 to 500): 1, and the concentration of the ammonium sulfate solution is 0.1 to 10 mmol/L.

The dosage of water is not limited in this application, as long as the objectives of this application can be achieved. For example, a ratio between the volume of water to the mass of the P-doped Si/SiO₂ composite particles is (10 to 100) mL: 100 mg.

In some embodiments, a concentration of the nitrogen source dispersion solution is 0.01 to 1 mol/L. Without being limited to any theory, by controlling the concentration of the nitrogen source dispersion solution to fall within the foregoing range, the coating uniformity of the nitrogen source is improved.

In some embodiments, during the calcination of the nitrogen-coated P-doped Si/SiO₂, the calcination temperature is 200 °C to 800 °C, the calcination time is 1 to 5 hours, and the calcination is performed in an inert atmosphere such as argon and nitrogen. Without being limited to any theory, by controlling the calcination temperature and the calcination time to fall within the foregoing ranges, it is ensured that the nitrogen source as a coating can be thoroughly carbonized into N-doped C, the coating amount of the N-doped C can be controlled to fall within a desirable range, the uniformity of the N-doped C coating is improved. In addition, the uniformity of the mesopores on the surface of the N-doped C shell obtained by calcination can be controlled, and the pore diameter of the mesopores can be controlled to fall within a desirable range, thereby increasing the contact area between the yolk core-shell structured composite material and the electrolytic solution, improving the transfer efficiency of lithium ions, increasing electrochemical reaction active sites, and increasing the practical capacity of the lithium-ion battery. The calcination performed in the inert atmosphere can prevent foreign matters from entering the calcination product.

In some embodiments, a mass percent of the hydrofluoric acid solution is 5 wt% to 50 wt%. Without being limited to any theory, by controlling the mass percent of the hydrofluoric acid solution to fall within the foregoing range, the SiO₂ can be etched away, and a relatively large cavity structure can be formed.

In some embodiments, an etching time of the etching by using a hydrofluoric acid solution is 5 to 60 minutes. Without being limited to any theory, by controlling the etching time to fall within the foregoing range, the amount of the SiO₂ etched away can be caused to fall within a desirable range, so as to form a cavity structure of an appropriately moderate size.

Next, a secondary battery, a battery module, a battery pack, and an electrical device according to this application are described below in detail with due reference to drawings.

In an embodiment of this application, a secondary battery is provided.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Positive electrode plate]

The positive electrode plate includes a positive current collector and a positive film disposed on at least one surface of the positive current collector.

As an example, the positive current collector includes two surfaces opposite to each other in a thickness direction of the positive current collector. The positive film layer is disposed on either or both of the two opposite surfaces of the positive current collector.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂, and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but are not limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive slurry, coating a positive current collector with the positive slurry, and performing steps such as drying and cold calendering to obtain the positive electrode plate.

### [Negative electrode plate]

The negative electrode plate includes a negative current collector and a negative film layer disposed on at least one surface of the negative current collector. The negative film layer includes a negative active material.

As an example, the negative current collector includes two surfaces opposite to each other in a thickness direction of the negative current collector. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material includes the yolk core-shell structured composite material according to this application.

In some embodiments, the negative film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold calendering to obtain the negative electrode plate.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolytic solution. The electrolytic solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolytic solution further optionally includes an additive. For example, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, or polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

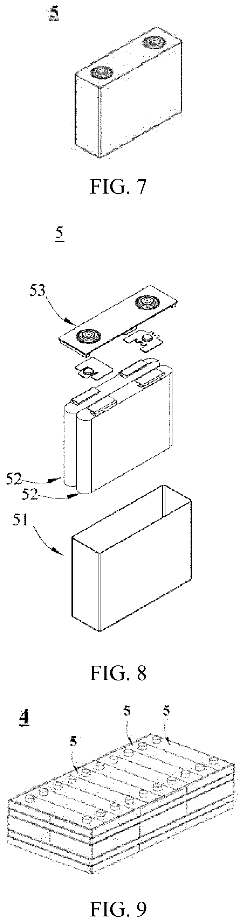

The shape of the secondary battery is not particularly limited in this application, and may be cylindrical, prismatic or any other shape. FIG. 7 shows a prismatic secondary battery 5 as an example.

In some embodiments, referring to FIG. 8, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolytic solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 9 shows a battery module 4 as an example. Referring to FIG. 9, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

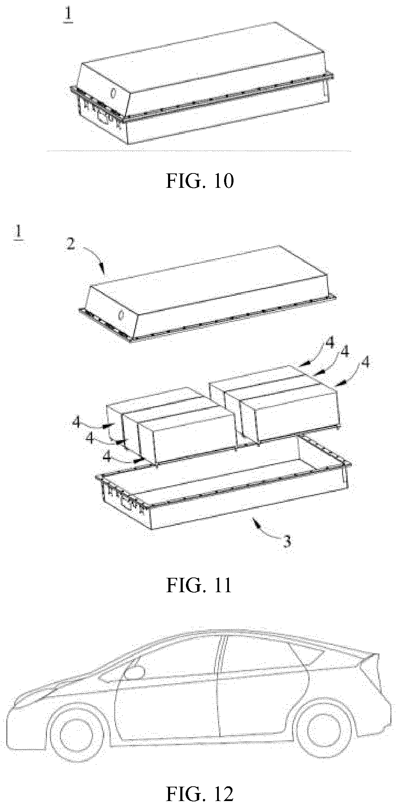

FIG. 10 and FIG. 11 show a battery pack 1 as an example. Referring to FIG. 10 and FIG. 11, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 12 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes embodiments of this application. The embodiments described below are illustrative, and are merely intended to construe this application but not to limit this application. Unless other techniques or conditions are expressly specified in an embodiment hereof, the techniques or conditions described in the literature in this field or in an instruction manual of the product may apply. A reagent or instrument used herein without specifying the manufacturer is a conventional product that is commercially available in the market.

### Embodiment 1

Mixing 100 mg of SiO particles and 10 mg of P₂O₅ powder well, heating the mixture to 950 °C in an argon atmosphere, and calcining the mixture for 5 hours to obtain P-doped Si/SiO₂ composite particles.

Adding 100 mg of the P-doped Si/SiO₂ composite particles and 10 mg of sodium dodecyl sulfonate as a surfactant into 100 mL of deionized water. Sonicating the mixture until the sodium dodecyl sulfonate is fully dissolved, so that a mixed solution is obtained. Adding 0.1 mL of a pyrrole monomer dispersion solution (with a concentration of 0.1 mol/L, in which the dispersant is ethanol) and then adding 15 mL of an ammonium persulfate solution (with a concentration of 0.1 mmol/L) into the mixed solution under the conditions of continuous agitation and ice bath. Keeping reaction for 6 hours in an ice bath, and leaving the pyrrole monomer to self-polymerize on the surface of the composite particles. Subsequently, filtering the mixture, washing a resultant filter cake with deionized water, and collecting the polypyrrole-coated P-doped Si/SiO₂.

Calcining the polypyrrole-coated P-doped Si/SiO₂ at 400 °C for 2 hours in an argon atmosphere to obtain a P-doped Si/SiO₂ composite material that is coated with the N-doped C and that contains mesopores.

Etching, by using a 10 wt% hydrofluoric acid solution, the P-doped Si/SiO₂ composite material that is coated with the N-doped C, for 10 minutes, so as to remove the SiO₂ and obtain a P-doped Si composite material that is coated with the N-doped C, that is, a yolk core-shell structured composite material.

### Embodiments 2 to 15

Identical to Embodiment 1 except that the following parameters are adjusted according to Table 1: the mass ratio between the SiO particles and the P₂O₅ powder, the calcination temperature of the SiO particles and the P₂O₅ powder, the calcination time of the SiO particles and the P₂O₅ powder, the ratio of the amount of substance of the pyrrole monomer to the mass of the P-doped Si/SiO₂ composite particles, the concentration of the pyrrole monomer dispersion solution, the calcination temperature of the polypyrrole-coated P-doped Si/SiO₂, the calcination time of the polypyrrole-coated P-doped Si/SiO₂, and the mass percent of the hydrofluoric acid solution.

### Comparative Embodiment 1

Identical to Embodiment 2 except absence of the step of etching, by using a 10 wt% hydrofluoric acid solution, the P-doped Si/SiO₂ composite material that is coated with the N-doped C, as shown in Table 1.

### Comparative Embodiment 2

Heating 150 mg of SiO particles to 950 °C in an argon atmosphere, and calcining the particles for 5 hours to obtain Si/SiO₂ composite particles.

Adding 100 mg of the Si/SiO₂ composite particles and 10 mg of sodium dodecyl sulfonate as a surfactant into 100 mL of deionized water. Sonicating the mixture until the sodium dodecyl sulfonate is fully dissolved, so that a mixed solution is obtained. Adding 0.1 mL of a pyrrole monomer dispersion solution (with a concentration of 0.1 mol/L, in which the dispersant is ethanol) and then adding 15 mL of an ammonium persulfate solution (with a concentration of 0.1 mmol/L) into the mixed solution under the conditions of continuous agitation and ice bath. Keeping reaction for 6 hours in an ice bath, and leaving the pyrrole monomer to self-polymerize on the surface of the composite particles. Subsequently, filtering the mixture, washing a resultant filter cake with deionized water, and collecting the polypyrrole-coated Si/SiO₂.

Calcining the polypyrrole-coated Si/SiO₂ at 400 °C for 2 hours in an argon atmosphere to obtain a Si/SiO₂ composite material that is coated with the N-doped C and that contains mesopores.

Etching, by using a 10 wt% hydrofluoric acid solution, the Si/SiO₂ composite material that is coated with the N-doped C, for 10 minutes, so as to remove the SiO₂ and obtain a Si composite material that is coated with the N-doped C.

### Comparative Embodiment 3

Mixing 150 mg of SiO particles and 10 mg of P₂O₅ powder well, heating the mixture to 950 °C in an argon atmosphere, and calcining the mixture for 5 hours to obtain P-doped Si/SiO₂ composite particles.

Adding 100 mg of the P-doped Si/SiO₂ composite particles and 10 mg of sodium dodecyl sulfonate as a surfactant into 100 mL of deionized water. Sonicating the mixture until the sodium dodecyl sulfonate is fully dissolved, so that a mixed solution is obtained. Adding 0.1 mL of a phenylacetylene monomer dispersion solution (with a concentration of 0.1 mol/L, in which the dispersant is ethanol) and then adding 15 mL of an ammonium persulfate solution (with a concentration of 0.1 mmol/L) into the mixed solution under the conditions of continuous agitation and ice bath. Keeping reaction for 6 hours in an ice bath, and leaving the phenylacetylene monomer to self-polymerize on the surface of the composite particles. Subsequently, filtering the mixture, washing a resultant filter cake with deionized water, and collecting the polyphenylacetylene-coated P-doped Si/SiO₂.

Calcining the polyphenylacetylene-coated P-doped Si/SiO₂ at 400 ° for 2 hours in an argon atmosphere to obtain a C-coated P-doped Si/SiO₂ composite material that contains mesopores.

Etching the C-coated P-doped Si/SiO₂ composite material for 10 minutes by using a 10 wt% hydrofluoric acid solution, so as to remove the SiO₂ and obtain a C-coated P-doped Si composite material.

### Comparative Embodiment 4

Heating 150 mg of SiO particles to 950 °C in an argon atmosphere, and calcining the particles for 5 hours to obtain Si/SiO₂ composite particles.

Adding 100 mg of the Si/SiO₂ composite particles and 10 mg of sodium dodecyl sulfonate as a surfactant into 100 mL of deionized water. Sonicating the mixture until the sodium dodecyl sulfonate is fully dissolved, so that a mixed solution is obtained. Adding 0.1 mL of a phenylacetylene monomer dispersion solution (with a concentration of 0.1 mol/L, in which the dispersant is ethanol) and then adding 15 mL of an ammonium persulfate solution (with a concentration of 0.1 mmol/L) into the mixed solution under the conditions of continuous agitation and ice bath. Keeping reaction for 6 hours in an ice bath, and leaving the phenylacetylene monomer to self-polymerize on the surface of the composite particles. Subsequently, filtering the mixture, washing a resultant filter cake with deionized water, and collecting the polyphenylacetylene-coated Si/SiO₂.

Calcining the polyphenylacetylene-coated Si/SiO₂ at 400 °C for 2 hours in an argon atmosphere to obtain a C-coated Si/SiO₂ composite material that contains mesopores.

Etching the C-coated Si/SiO₂ composite material for 10 minutes by using a 10 wt% hydrofluoric acid solution, so as to remove the SiO₂ and obtain a C-coated Si composite material.

Relevant parameters of Embodiments 1 to 15 and Comparative Embodiments 1 to 4 are shown in Table 1 below.

**Table 1 Relevant parameters of Embodiments 1 to 15 and Comparative Embodiments 1 to 4**

| | Mass ratio between SiO particles and P₂O₅ powder | Calcination temperature of SiO particles and P₂O₅ powder (°C) | Calcination time of SiO particles and P₂O₅ powder (h) | Ratio of amount of substance of pyrrole monomer to mass of P-doped Si/SiO₂ composite particles | Concentration of pyrrole monomer dispersion solution (mol/L) | Calcination temperature of polypyrrole-coated P-doped Si/SiO₂ (°C) | Calcination time of polypyrrole-coated P-doped Si/SiO₂ (h) | Mass percent of hydrofluoric acid solution (%) | Etching time (min) |
|---|---|---|---|---|---|---|---|---|---|
| Embodiment 1 | 10:1 | 950 | 5 | 0.01 mmol: 100 mg | 0.1 | 400 | 2 | 10 | 10 |
| Embodiment 2 | 15:1 | 950 | 5 | 0.01 mmol: 100 mg | 0.1 | 400 | 2 | 10 | 10 |
| Embodiment 3 | 20:1 | 950 | 5 | 0.01 mmol: 100 mg | 0.1 | 400 | 2 | 10 | 10 |
| Embodiment 4 | 30:1 | 950 | 5 | 0.01 mmol: 100 mg | 0.1 | 400 | 2 | 10 | 10 |
| Embodiment 5 | 50:1 | 950 | 5 | 0.01 mmol: 100 mg | 0.1 | 400 | 2 | 10 | 10 |
| Embodiment 6 | 10:1 | 1200 | 5 | 0.01 mmol: 100 mg | 0.1 | 400 | 2 | 10 | 10 |
| Embodiment 7 | 10:1 | 1100 | 5 | 0.01 mmol: 100 mg | 0.1 | 400 | 2 | 10 | 10 |
| Embodiment 8 | 10:1 | 900 | 5 | 0.01 mmol: 100 mg | 0.1 | 400 | 2 | 10 | 10 |
| Embodiment 9 | 10:1 | 600 | 5 | 0.01 mmol: 100 mg | 0.1 | 400 | 2 | 10 | 10 |
| Embodiment 10 | 10:1 | 950 | 5 | 0.001 mmol: 100 mg | 0.1 | 400 | 2 | 10 | 10 |
| Embodiment 11 | 10:1 | 950 | 5 | 0.1 mmol: 100 mg | 0.1 | 400 | 2 | 10 | 10 |
| Embodiment 12 | 10:1 | 950 | 5 | 0.01 mmol: 100 mg | 0.01 | 400 | 2 | 10 | 10 |
| Embodiment 13 | 10:1 | 950 | 5 | 0.01 mmol: 100 mg | 0.2 | 400 | 2 | 10 | 10 |
| Embodiment 14 | 10:1 | 950 | 5 | 0.01 mmol: 100 mg | 0.1 | 400 | 2 | 20 | 10 |
| Embodiment 15 | 10:1 | 950 | 5 | 0.01 mmol: 100 mg | 0.1 | 400 | 2 | 5 | 10 |
| Comparative Embodiment 1 | 15:1 | 950 | 5 | 0.01 mmol: 100 mg | 0.1 | 400 | 2 | - | - |
| Comparative Embodiment 2 | - | 950 | 5 | 0.01 mmol: 100 mg | 0.1 | 400 | 2 | 10 | 10 |
| Comparative Embodiment 3 | 15:1 | 950 | 5 | - | - | 400 | 2 | 10 | 10 |
| Comparative Embodiment 4 | - | 950 | 5 | - | - | 400 | 2 | 10 | 10 |

| | | | | | | | | | |
|---|---|---|---|---|---|---|---|---|---|
| Note: "-" means nonexistence of the value. | | | | | | | | | |

A performance test is performed on the yolk core-shell structured composite materials prepared in Embodiments 1 to 15 and Comparative Embodiments 1 to 4.

### (1) Measuring the particle size distribution

Adding approximately 0.02 gram of the composite material obtained in each embodiment or comparative embodiment into a 50 mL clean beaker, adding approximately 20 mL of deionized water, and then adding 0.02 gram of a surfactant to completely disperse the powder in the water. Sonicating the mixture for 5 minutes in a 120 W ultrasonic cleaner. Measuring the particle size distribution by using MasterSizer 2000, so as to obtain Dᵥ₅₀ of the yolk core-shell structured composite material and Dᵥ₅₀ of the core.

### (2) Measuring the average thickness of the shell

Measuring, by using a high-resolution transmission electron microscope (TEM), the average thickness of the shell of the composite material obtained in each embodiment or comparative embodiment. Observing the internal structure of the yolk core-shell structured composite material at a room temperature, and then taking a transmission electron microscope image.

### (3) Measuring the doping percent of phosphorus the doping percent of nitrogen

Measuring the content of the N and P elements before and after the doping by using an elemental analyzer, so as to obtain the actual effective doping percent of the N and P elements in the composite material prepared in each embodiment or comparative embodiment.

### (4) Measuring the pore diameter of mesopores

Injecting nitrogen into a specimen tube of the yolk core-shell structured composite material by use of a nitrogen adsorption pore size analyzer in a liquid nitrogen environment, measuring the adsorption amount at each partial pressure point, and obtaining an adsorption isotherm; and then expelling the nitrogen to obtain a desorption isotherm. Subsequently, calculating the specific surface area and the pore diameter of the composite material prepared in each embodiment or comparative embodiment based on the BET theory (multi-molecular layer adsorption) and the BJH theory (pore volume and pore size distribution).

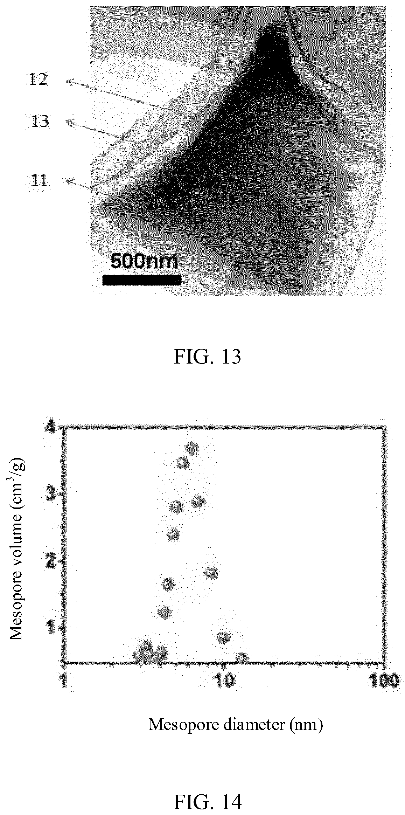

The test results are shown in Table 2, FIG. 13, and FIG. 14.

**Table 2 Test results of Embodiments 1 to 15 and Comparative Embodiments 1 to 4**

| | Dᵥ₅₀ of yolk core-shell structured composite material (□m) | Dᵥ₅₀ of core (□m) | Average thickness of shell (nm) | Mass percent of phosphorus in phosphorus-doped silicon material | Mass percent of nitrogen in nitrogen-doped carbon material | Average pore diameter of mesopores (nm) |
|---|---|---|---|---|---|---|
| Embodiment 1 | 3.0 | 2.7 | 10 | 1.5% | 1.0% | 5 |
| Embodiment 2 | 3.5 | 3.4 | 10 | 1.5% | 1.0% | 5 |
| Embodiment 3 | 3.7 | 3.6 | 20 | 1.5% | 1.0% | 5 |
| Embodiment 4 | 4.0 | 3.8 | 10 | 1.5% | 1.0% | 5 |
| Embodiment 5 | 7.0 | 6.8 | 10 | 1.5% | 1.0% | 5 |
| Embodiment 6 | 3.5 | 3.4 | 5 | 1.5% | 1.0% | 5 |
| Embodiment 7 | 3.5 | 3.4 | 8 | 1.5% | 1.0% | 5 |
| Embodiment 8 | 3.5 | 3.4 | 12 | 1.5% | 1.0% | 5 |
| Embodiment 9 | 3.5 | 3.4 | 20 | 1.5% | 1.0% | 5 |
| Embodiment 10 | 3.5 | 3.4 | 10 | 0.1% | 1.0% | 5 |
| Embodiment 11 | 3.5 | 3.4 | 10 | 3.0% | 1.0% | 5 |
| Embodiment 12 | 3.5 | 3.4 | 10 | 1.5% | 0.1% | 5 |
| Embodiment 13 | 3.5 | 3.4 | 10 | 1.5% | 2.0% | 5 |
| Embodiment 14 | 3.5 | 3.4 | 10 | 1.5% | 1.0% | 3 |
| Embodiment 15 | 3.5 | 3.4 | 10 | 1.5% | 1.0% | 10 |
| Comparative Embodiment 1 | 3.5 | 3.4 | 10 | 0.3% | 1.0% | 20 |
| Comparative Embodiment 2 | 3.5 | 3.4 | 10 | 0 | 1.0% | 5 |
| Comparative Embodiment 3 | 3.5 | 3.4 | 10 | 1.5% | 0 | 5 |
| Comparative Embodiment 4 | 3.5 | 3.4 | 10 | 0 | 0 | 5 |

FIG. 13 is a transmission electron microscope image of a yolk core-shell structured composite material prepared in Embodiment 1. As shown in FIG. 13, the yolk core-shell structured composite material includes a core 11 and a shell 12. A cavity 13 exists between the core 11 and the shell 12.

FIG. 14 is a pore size distribution graph of mesopores of a yolk core-shell structured composite material prepared in Embodiment 1. As shown in FIG. 14, the mesopore diameter falls within a range of 3 to 10 nm.

Further, a performance test is performed on the lithium-ion batteries prepared from the yolk core-shell structured composite materials prepared in Embodiments 1 to 15 and Comparative Embodiments 1 to 4. The test results are shown in Table 3 below.

### (1) Preparing a lithium-ion battery

### <Preparing a positive electrode plate>

Mixing lithium iron phosphate (LiFePO₄) as a positive active material, carbon black as a conductive agent, and sodium carboxymethyl cellulose as a binder at a mass ratio of 8: 1: 1, adding N-methyl-pyrrolidone (NMP) as a solvent, and stirring the mixture well with a vacuum mixer to obtain a positive slurry in which the solid content is 65 wt%. Coating both surfaces of a 12-µm thick positive current collector aluminum foil with the positive slurry evenly, and drying the slurry in a 120 °C environment. Performing cold calendering to obtain a positive electrode plate coated with a 60-µm thick positive active material layer. Subsequently, performing steps such as tab forming and slitting to obtain a positive electrode plate.

### <Preparing a negative electrode plate>

Using the material prepared in each embodiment and comparative embodiment above as a negative active material, and mixing the negative active material with carbon black as a conductive agent, and polyacrylic acid as a binder at a mass ratio of 7: 1.5: 1.5. Adding deionized water as a solvent, and stirring the mixture well with a vacuum mixer to obtain a negative slurry in which the solid content is 50 wt%. Coating both surfaces of an 8-µm thick negative current collector copper foil with the negative slurry evenly, and drying the slurry in a 110 °C environment. Performing cold calendering to obtain a negative electrode plate coated with a 50-µm thick negative active material layer. Subsequently, performing steps such as tab forming and slitting to obtain a negative electrode plate.

### <Preparing an electrolytic solution>

Mixing ethylene carbonate (EC) as a nonaqueous organic solvent and ethyl methyl carbonate (EMC) at a volume ratio of 3: 7 in an argon atmosphere glovebox (in which the content of H₂O is less than 0.1 ppm, and the content of O₂ is less than 0.1 ppm), so as to obtain an electrolytic solution solvent. Subsequently, dissolving a lithium salt LiPF₆ in the mixed solvent to make an electrolytic solution in which the mass percent of the lithium salt is 12.5%.

### <Preparing a separator>

Using a 9-□m thick polypropylene film as a separator. Slitting the film into appropriate widths according to the dimensions of the positive electrode plate and the negative electrode plate before the separator is ready for use.

### <Preparing a lithium-ion battery>

Stacking the positive electrode plate, the separator, and the negative electrode plate in sequence so that the separator is located between the positive electrode plate and the negative electrode plate to serve a purpose of isolation, and then winding the stacked structure to obtain an electrode assembly. Placing the electrode assembly into an outer packaging shell, performing drying and then injecting an electrolytic solution, and performing steps such as vacuum sealing, standing, chemical formation, and shaping to obtain a lithium-ion battery.

### (2) Testing a first-cycle discharge capacity of the lithium-ion battery

Charging the lithium-ion battery of each embodiment and comparative embodiment at a constant current of 0.33 C at a temperature of 25 °C until the voltage reaches 2.00 V, and then charging the battery at a constant voltage until the current reaches 0.05 C. Subsequently, discharging the battery at a constant current of 0.33 C until the voltage reaches 0.05 V, and recording a first-cycle discharge capacity.

### (3) Testing the cycle performance of the lithium-ion battery

Charging the lithium-ion battery of each embodiment and comparative embodiment at a constant current of 0.33 C at a temperature of 25 °C until the voltage reaches 2.00 V, and then charging the battery at a constant voltage until the current reaches 0.05 C. Subsequently, discharging the battery at a constant current of 1 C until the voltage reaches 0.05 V, and obtaining a first-cycle discharge capacity denoted as C₀. Repeating the foregoing steps for the same lithium-ion secondary battery, and starting counting the number of cycles. Recording the discharge capacity Cₙ of the lithium-ion battery at the end of the n^{th} cycle. Calculating the cycle capacity retention rate of the battery at the end of n cycles according to the following formula: N^{th}-cycle capacity retention rate = (N^{th}-cycle discharge capacity Cₙ/first-cycle discharge capacity C₀) × 100%. At the end of 1000 cycles, calculating the capacity retention rate = C₁₀₀₀/C₀ × 100%.

### (4) Testing the rate performance of the lithium-ion battery

Charging the lithium-ion battery of each embodiment and comparative embodiment at a constant current of 0.33 C at a temperature of 25 °C until the voltage reaches 3.60 V, and then charging the battery at a constant voltage until the current reaches 0.05 C. Subsequently, discharging the battery at a constant current of 0.33 C, 1 C, 2 C, and 3 C separately until the voltage reaches 2.50 V, and recording the discharge capacity separately.

**Table 3 Performance test results of Embodiments 1 to 15 and Comparative Embodiments 1 to 4**

| | First-cycle discharge capacity C₀ tested at 25 °C (mAh/g) | Capacity retention rate tested at 25 °C (1000 cycles) | Discharge capacity tested at different rates under 25 °C (mAh/g) | | | |
|---|---|---|---|---|---|---|
| | | | 0.33 C | 1 C | 2 C | 3 C |
| Embodiment 1 | 145 | 85.2% | 145 | 144.1 | 142.1 | 136.3 |
| Embodiment 2 | 145 | 85.1% | 145 | 144.1 | 142.1 | 136.3 |
| Embodiment 3 | 145 | 85.3% | 145 | 144.1 | 142.1 | 136.3 |
| Embodiment 4 | 145 | 85.2% | 145 | 144.1 | 142.1 | 136.3 |
| Embodiment 5 | 142 | 85.2% | 142 | 141.1 | 139.2 | 133.5 |
| Embodiment 6 | 145 | 85.8% | 145 | 144.1 | 142.1 | 136.3 |
| Embodiment 7 | 145 | 86.1% | 145 | 144.1 | 142.1 | 136.3 |
| Embodiment 8 | 144 | 86.2% | 144 | 143.1 | 141.1 | 135.4 |
| Embodiment 9 | 140 | 86.4% | 140 | 139.2 | 137.2 | 131.6 |
| Embodiment 10 | 145 | 85.3% | 145 | 144.1 | 142.1 | 136.3 |
| Embodiment 11 | 145 | 85.2% | 145 | 144.1 | 142.1 | 136.3 |
| Embodiment 12 | 145 | 85.1% | 145 | 144.1 | 142.1 | 136.3 |
| Embodiment 13 | 145 | 85.3% | 145 | 144.1 | 142.1 | 136.3 |
| Embodiment 14 | 145 | 85.4% | 145 | 144.1 | 142.1 | 136.3 |
| Embodiment 15 | 145 | 85.2% | 145 | 144.1 | 142.1 | 136.3 |
| Comparative Embodiment 1 | 97 | 46.3% | 97 | 96.4 | 93.1 | 88.2 |
| Comparative Embodiment 2 | 139 | 77.9% | 139 | 138.2 | 135.2 | 128.7 |
| Comparative Embodiment 3 | 135 | 82.4% | 135 | 134.2 | 130.3 | 124.9 |
| Comparative Embodiment 4 | 129 | 67.9% | 129 | 128.2 | 125.4 | 120.3 |

As can be seen from the above test results, the negative electrode plate of the lithium-ion batteries corresponding to Embodiments 1 to 15 includes a yolk core-shell structured composite material. A cavity exists between the core and the shell of the yolk core-shell structured composite material. The core includes a phosphorus-doped silicon material, and the shell includes a nitrogen-doped carbon material. Therefore, the lithium-ion batteries have achieved a relatively high first-cycle discharge capacity, a relatively high capacity retention rate, and good rate performance.

As can be seen from Embodiments 1 to 5, the Dᵥ₅₀ of the yolk core-shell structured composite material is controlled to fall within the range of 3 to 7 □m, the Dᵥ₅₀ of the core is controlled to fall within the range of 2.7 to 6.8 □m, and the maximum distance between the outer wall of the core and the inner wall of the shell is controlled to fall within the range of 5 to 300 nm, and therefore, the lithium-ion batteries have achieved a relatively high first-cycle discharge capacity, a relatively high capacity retention rate, and good rate performance. In addition, when the Dᵥ₅₀ of the yolk core-shell structured composite material is controlled to fall within the range of 3 to 4 □m, and the Dᵥ₅₀ of the core is controlled to fall within the range of 2.7 to 3.8 □m, the lithium-ion batteries are more excellent in the first-cycle discharge capacity, the capacity retention rate, the rate performance, and the overall performance.

As can be seen from Embodiments 2 and 6 to 9, with the increase of the average thickness of the shell, the capacity retention rate of the lithium-ion battery is improved to some extent, and the first-cycle discharge capacity and the rate performance show a declining trend, but the degree of decline is not significant. Without being limited to any theory, the applicant hereof holds that, with the increase of the average thickness of the shell, the transfer efficiency of lithium ions decreases, thereby reducing the practical capacity. However, the shell is not prone to rupture during volume expansion of the phosphorus-doped silicon material, thereby enhancing the electrochemical cycling stability of the yolk core-shell structured composite material, and increasing the capacity retention rate.

As can be seen from Embodiments 2 and 10 to 11, when the doping percent of phosphorus is controlled to fall within the range specified in this application, the first-cycle discharge capacity, the capacity retention rate, and the rate performance of the lithium-ion batteries are relatively high. Without being limited to any theory, the applicant hereof holds that, by controlling the doping percent of phosphorus in the phosphorus-doped silicon material to fall within the range specified in this application, the added phosphorus can increase the concentration of free electrons in the silicon material, improve the electron transfer efficiency, and in turn, increase the conductivity of the silicon material and the practical capacity of the lithium-ion battery, and achieve relatively high capacity retention rates and rate performance.

As can be seen from Embodiments 2 and 12 to 13, when the doping percent of nitrogen is controlled to fall within the range specified in this application, the first-cycle discharge capacity, the capacity retention rate, and the rate performance of the lithium-ion batteries are relatively high. Without being limited to any theory, the applicant hereof holds that, by controlling the doping percent of nitrogen in the nitrogen-doped carbon material to fall within the range specified in this application, this application can improve the electron transfer efficiency between the shell and the phosphorus-doped silicon material in the core, thereby increasing the practical capacity of the lithium-ion battery, and achieving relatively high capacity retention rates and rate performance.

As can be seen from Embodiments 2 and 14 to 15, when the average pore diameter of the mesopores is controlled to fall within the range specified in this application, the first-cycle discharge capacity, the capacity retention rate, and the rate performance of the lithium-ion batteries are relatively high. Without being limited to any theory, the applicant hereof holds that, the mesopores with a pore diameter falling within the range specified herein, which are disposed in the surface of the shell in the yolk core-shell structured composite material, can increase the contact area between the yolk core-shell structured composite material and the electrolytic solution, improve the transfer efficiency of lithium ions, further increase electrochemical reaction active sites, increase the practical capacity of the lithium-ion battery, and at the same time, achieve relatively high capacity retention rates and rate performance.

In contrast, in Comparative Embodiment 1, no etching is performed by using the hydrofluoric acid solution, and therefore, the formed cavity is relatively small, and the capacity retention rate of the lithium-ion battery declines significantly. Without being limited to any theory, the applicant hereof holds that, the Si in the P-doped Si core expands in volume during electrochemical cycling, but no cavity is available for accommodating the volume expansion. Consequently, the capacity fades rapidly during cycling, thereby impairing the capacity retention rate of the lithium-ion battery and being hardly able to meet requirements in practical applications.

The Si in the core in Comparative Embodiment 2 is not doped with P. Consequently, the electron transfer efficiency between the silicon materials is reduced, and the conductivity is low, thereby reducing the first-cycle discharge capacity, capacity retention rate, and rate performance of the lithium-ion battery, and being hardly able to meet requirements in practical applications.

The C in the shell in Comparative Embodiment 3 is not doped with N. Consequently, the electron transfer efficiency between the shell and the phosphorus-doped silicon material in the core is reduced, and the conductivity is low, thereby reducing the first-cycle discharge capacity, capacity retention rate, and rate performance of the lithium-ion battery, and being hardly able to meet requirements in practical applications.

In Comparative Embodiment 4, the Si in the core is not doped with P, and the C in the shell is not doped with N. Consequently, the electron transfer efficiency is reduced between the silicon materials, and between the shell and the core, and the conductivity is low, thereby reducing the first-cycle discharge capacity, capacity retention rate, and rate performance of the lithium-ion battery, and being hardly able to meet requirements in practical applications.

It is hereby noted that this application is not limited to the foregoing embodiments. The foregoing embodiments are merely examples. Any and all embodiments with substantively the same composition or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A yolk core-shell structured composite material, **characterized in that**, the material comprises a core (11) and a shell (12), and a cavity (13) exists between the core (11) and the shell (12); and
the core (11) comprises a phosphorus-doped silicon material, and the shell (12) comprises a nitrogen-doped carbon material, wherein the Dᵥ₅₀ of the yolk core-shell structured composite material is 3 to 7 µm.

2. The yolk core-shell structured composite material according to claim 1, wherein the Dᵥ₅₀ of the core (11) is 2.7 to 6.8 µm, and preferably 2.7 to 3.8 µm; an average thickness of the shell (12) is 5 to 20 nm, and preferably 8 to 12 nm; and a maximum distance between an outer wall of the core and an inner wall of the shell (12) is 5 to 300 nm, and preferably 50 to 150 nm, wherein the Dᵥ₅₀ is measured according to paragraph [0155] of the English translation of the application as filed.

3. The yolk core-shell structured composite material according to claim 1, **characterized in that** the yolk core-shell structured composite material comprises mesopores (14) with an average pore diameter of 3 to 10 nm, wherein the pore diameter is measured according to paragraph [0161] of the English translation of the application as filed.

4. The yolk core-shell structured composite material according to claim 1, **characterized in that** a mass percent of phosphorus in the phosphorus-doped silicon material is 0.1% to 3%; and a mass percent of nitrogen in the nitrogen-doped carbon material is 0.1% to 2%, **characterized in that** the silicon material is at least one selected from silicon, silicon monoxide, and silicon dioxide.

5. A method for preparing the yolk core-shell structured composite material according to any one of claims 1 to 4, **characterized in that**, the preparation method comprises:
mixing SiO and a phosphorus source well, and then calcining the mixed product to obtain P-doped Si/SiO₂ composite particles;
applying a nitrogen source as a coating onto surfaces of the P-doped Si/SiO₂ composite particles to obtain nitrogen-coated P-doped Si/SiO₂;
calcining the nitrogen-coated P-doped Si/SiO₂ to obtain a P-doped Si/SiO₂ composite material that is coated with N-doped C; and
etching, by using a hydrofluoric acid solution, the P-doped Si/SiO₂ composite material that is coated with the N-doped C, to obtain a P-doped Si composite material that is coated with the N-doped C.

6. The preparation method according to claim 5, **characterized in that** the phosphorus source is at least one selected from P₂O₅, NaH₂PO₂, phytic acid, and triphenylphosphine; and the nitrogen source is at least one selected from pyrrole, melamine, urea, and dopamine, **characterized in that** a mass ratio between the SiO and the phosphorus source is (5 to 50): 1.

7. The preparation method according to claim 5, **characterized in that**, during the calcination of the product of well mixing the SiO and the phosphorus source, a calcination temperature is 500 °C to 1200 °C, a calcination time is 1 to 10 hours, and the calcination is performed in an inert atmosphere, **characterized in that** a ratio of an amount of substance of the nitrogen source to a mass of the P-doped Si/SiO₂ composite particles is (0.001 to 0.1) mmol: 100 mg.

8. The preparation method according to claim 5, **characterized in that** the applying a nitrogen source as a coating onto surfaces of the P-doped Si/SiO₂ composite particles comprises: adding the P-doped Si/SiO₂ composite particles and a surfactant into water; adding a nitrogen source dispersion solution and an initiator in sequence under conditions of continuous agitation and ice bath after the surfactant is dissolved; and keeping vibrating under a condition of ice bath, **characterized in that** a concentration of the nitrogen source dispersion solution is 0.01 to 1 mol/L.

9. The preparation method according to claim 5, **characterized in that**, during the calcination of the nitrogen-coated P-doped Si/SiO₂, a calcination temperature is 200 °C to 800 °C, a calcination time is 1 to 5 hours, and the calcination is performed in an inert atmosphere.

10. The preparation method according to claim 5, **characterized in that** a mass percent of the hydrofluoric acid solution is 5 wt% to 50 wt%, **characterized in that** an etching time of the etching is 5 to 60 minutes.

11. A negative electrode material, **characterized in that** the negative electrode material comprises the yolk core-shell structured composite material according to any one of claims 1 to 4 or a yolk core-shell structured composite material prepared by the preparation method according to any one of claims 5 to 10.

12. A secondary battery (5), **characterized in that** the secondary battery (5) comprises the negative electrode material according to claim 11.

13. A battery module (4), **characterized in that** the battery module (4) comprises the secondary battery (5) according to claim 12.

14. A battery pack (1), **characterized in that** the battery pack (1) comprises the battery module (4) according to claim 13.

15. An electrical device, **characterized in that** the electrical device comprises at least one of the negative electrode material according to claim 11, the secondary battery (5) according to claim 12, the battery module (4) according to claim 13, or the battery pack (1) according to claim 14.

## Patentansprüche

1. Eigelb-Kern-Hülle-strukturiertes Verbundmaterial, das **dadurch gekennzeichnet ist, dass** das Material Folgendes umfasst: einen Kern (11) und eine Hülle (12) und ein Hohlraum (13) zwischen dem Kern (11) und der Hülle (12) vorliegt; und
der Kern (11) ein Phosphor-dotiertes Siliciummaterial umfasst und die Hülle (12) ein Stickstoff-dotiertes Kohlenstoffmaterial umfasst, wobei der D_{V50} des Eigelb-Kern-Hülle-strukturierten Verbundmaterials 3 bis 7 µm beträgt.

2. Eigelb-Kern-Hülle-strukturiertes Verbundmaterial nach Anspruch 1, wobei der D_{V50} des Kerns (11) 2,7 bis 6,8 µm und bevorzugt 2,7 bis 3,8 µm beträgt; eine durchschnittliche Dicke der Hülle (12) 5 bis 20 nm und bevorzugt 8 bis 12 nm beträgt; und ein maximaler Abstand zwischen einer äußeren Wand des Kerns und einer inneren Wand der Hülle (12) 5 bis 300 nm und bevorzugt 50 bis 150 nm beträgt, wobei der D_{V50} gemäß Abschnitt [155] der englischen Übersetzung der Anmeldung in der eingereichten Fassung gemessen wird.

3. Eigelb-Kern-Hülle-strukturiertes Verbundmaterial nach Anspruch 1, das **dadurch gekennzeichnet ist, dass** das Eigelb-Kern-Hülle-strukturierte Verbundmaterial Mesoporen (14) mit einem durchschnittlichen Porendurchmesser von 3 bis 10 nm umfasst, wobei der Porendurchmesser gemäß Abschnitt [161] der englischen Übersetzung der Anmeldung in der eingereichten Fassung gemessen wird.

4. Eigelb-Kern-Hülle-strukturiertes Verbundmaterial nach Anspruch 1, das **dadurch gekennzeichnet ist, dass** ein Masseprozent von Phosphor in dem Phosphor-dotierten Siliciummaterial 0,1 % bis 3 % beträgt; und ein Masseprozent von Stickstoff in dem Stickstoff-dotierten Kohlenstoffmaterial 0,1 % bis 2 % beträgt, **dadurch gekennzeichnet, dass** das Siliciummaterial mindestens eines aus Silicium, Siliciummonoxid und Siliciumdioxid ausgewähltes ist.

5. Verfahren zur Herstellung des Eigelb-Kern-Hülle-strukturierten Verbundmaterials nach einem der Ansprüche 1 bis 4, **dadurch gekennzeichnet, dass** das Herstellungsverfahren Folgendes umfasst:
gutes Vermischen von SiO und einer Phosphorquelle und dann Kalzinieren des gemischten Produkts, um P-dotierte Si/SiO₂-Verbundpartikel zu erhalten;
Auftragen einer Stickstoffquelle als eine Beschichtung auf Oberflächen der P-dotierten Si/SiO₂-Verbundpartikel, um Stickstoff-beschichtetes P-dotiertes Si/SiO₂ zu erhalten;
Kalzinieren des Stickstoff-beschichteten P-dotierten Si/SiO₂, um ein P-dotiertes Si/SiO₂-Verbundmaterial zu erhalten, das mit N-dotiertem C beschichtet ist; und
Ätzen des P-dotierten Si/SiO₂-Verbundmaterials, das mit dem N-dotierten C beschichtet ist, durch Verwendung einer Fluorwasserstoffsäurelösung, um ein P-dotiertes Si-Verbundmaterial zu erhalten, das mit dem N-dotierten C beschichtet ist.

6. Herstellungsverfahren nach Anspruch 5, das **dadurch gekennzeichnet ist, dass** die Phosphorquelle mindestens eine aus P₂O₅, NaH₂PO₂, Phytinsäure und Triphenylphosphan ausgewählte ist; und die Stickstoffquelle mindestens eine aus Pyrrol, Melamin, Harnstoff und Dopamin ausgewählte ist, **dadurch gekennzeichnet, dass** ein Masseverhältnis zwischen dem SiO und der Phosphorquelle (5 bis 50) : 1 beträgt.

7. Herstellungsverfahren nach Anspruch 5, das **dadurch gekennzeichnet ist, dass** während der Kalzinierung des Produkts des guten Vermischens des SiO und der Phosphorquelle eine Kalzinierungstemperatur 500 °C bis 1200 °C beträgt, eine Kalzinierungszeit 1 bis 10 Stunden beträgt und die Kalzinierung in einer inerten Atmosphäre durchgeführt wird, **dadurch gekennzeichnet, dass** ein Verhältnis einer Menge von Substanz der Stickstoffquelle zu einer Masse der P-dotierten Si/SiO₂-Verbundpartikel (0,001 bis 0,1) mmol : 100 mg beträgt.

8. Herstellungsverfahren nach Anspruch 5, das **dadurch gekennzeichnet ist, dass** das Auftragen einer Stickstoffquelle als eine Beschichtung auf Oberflächen der P-dotierten Si/SiO₂-Verbundpartikel Folgendes umfasst: Zugeben der P-dotierten Si/SiO₂-Verbundpartikel und eines oberflächenaktiven Mittels zu Wasser; Zugeben einer Stickstoffquelledispersionslösung und eines Initiators nacheinander unter Bedingungen von kontinuierlichem Rühren und Eisbad, nachdem das oberflächenaktive Mittel gelöst ist; und Beibehalten von Schwingen unter einer Bedingung von Eisbad, **dadurch gekennzeichnet, dass** eine Konzentration der Stickstoffquelledispersionslösung 0,01 bis 1 mol/l beträgt.

9. Herstellungsverfahren nach Anspruch 5, das **dadurch gekennzeichnet ist, dass** während der Kalzinierung des Stickstoff-beschichteten P-dotierten Si/SiO₂ eine Kalzinierungstemperatur 200 °C bis 800 °C beträgt, eine Kalzinierungszeit 1 bis 5 Stunden beträgt und die Kalzinierung in einer inerten Atmosphäre durchgeführt wird.

10. Herstellungsverfahren nach Anspruch 5, das **dadurch gekennzeichnet ist, dass** ein Masseprozent der Fluorwasserstoffsäurelösung 5 Gew.-% bis 50 Gew.-% beträgt, **dadurch gekennzeichnet, dass** eine Ätzdauer des Ätzens 5 bis 60 Minuten beträgt.

11. Negatives Elektrodenmaterial, das **dadurch gekennzeichnet ist, dass** das negative Elektrodenmaterial das Eigelb-Kern-Hülle-strukturierte Verbundmaterial nach einem der Ansprüche 1 bis 4 oder ein Eigelb-Kern-Hülle-strukturiertes Verbundmaterial, das durch das Herstellungsverfahren nach einem der Ansprüche 5 bis 10 hergestellt wird, umfasst.

12. Sekundärbatterie (5), die **dadurch gekennzeichnet, dass** die Sekundärbatterie (5) das negative Elektrodenmaterial nach Anspruch 11 umfasst.

13. Batteriemodul (4), das **dadurch gekennzeichnet, dass** das Batteriemodul (4) die Sekundärbatterie (5) nach Anspruch 12 umfasst.

14. Batteriepack (1), der **dadurch gekennzeichnet, dass** der Batteriepack (1) das Batteriemodul (4) nach Anspruch 13 umfasst.

15. Elektrische Vorrichtung, die **dadurch gekennzeichnet, dass** die elektrische Vorrichtung mindestens eines des negativen Elektrodenmaterials nach Anspruch 11, der Sekundärbatterie (5) nach Anspruch 12, des Batteriemoduls (4) nach Anspruch 13 oder des Batteriepacks (1) nach Anspruch 14 umfasst.

## Revendications

1. Matériau composite à structure cœur en jaune d'œuf-écorce, **caractérisé en ce que**, le matériau comprend un cœur (11) et une écorce (12), et **en ce qu'**une cavité (13) est présente entre le cœur (11) et l'écorce (12) ; et
le cœur (11) comprend un matériau de silicium dopé au phosphore, et l'écorce (12) comprend un matériau de carbone dopé à l'azote, le Dᵥ₅₀ du matériau composite cœur en jaune d'œuf-écorce est de 3 à 7 µm.

2. Matériau composite à structure cœur en jaune d'œuf-écorce selon la revendication 1, dans lequel le Dᵥ₅₀ du cœur (11) est de 2,7 à 6,8 µm, et de préférence de 2,7 à 3,8 µm ; une épaisseur moyenne de l'écorce (12) est de 5 à 20 nm, et de préférence de 8 à 12 nm ; et une distance maximale entre une paroi externe du cœur et une paroi interne de l'écorce (12) est de 5 à 300 nm, et de préférence de 50 à 150 nm, le Dᵥ₅₀ étant mesuré conformément au paragraphe [0155] de la traduction anglaise de la demande telle qu'elle a été déposée.

3. Matériau composite à structure cœur en jaune d'œuf-écorce selon la revendication 1, **caractérisé en ce que** le matériau composite à structure cœur en jaune d'œufécorce comprend des mésopores (14) dont le diamètre de pore moyen est de 3 à 10 nm, le diamètre de pore étant mesuré conformément au paragraphe [0161] de la traduction anglaise de la demande telle qu'elle a été déposée.

4. Matériau composite à structure cœur en jaune d'œuf-écorce selon la revendication 1, **caractérisé en ce qu'**un pourcentage massique du phosphore dans le matériau de silicium dopé au phosphore est de 0,1 % à 3 % ; et un pourcentage massique de l'azote dans le matériau de carbone dopé à l'azote est de 0,1 % à 2 %, **caractérisé en ce que** le matériau de silicium est au moins l'un sélectionné parmi le silicium, le monoxyde de silicium et le dioxyde de silicium.

5. Procédé de préparation du matériau composite à structure cœur en jaune d'œufécorce selon l'une quelconque des revendications 1 à 4, **caractérisé en ce que**, le procédé de préparation comprend les étapes consistant à :
bien mélanger du SiO et une source de phosphore, puis calciner le produit mélangé pour obtenir des particules composites Si dopé P/SiO₂ ;
appliquer une source d'azote en tant que revêtement sur des surfaces des particules composites Si dopé P/SiO₂ pour obtenir du Si dopé P/SiO₂ revêtu à l'azote ;
calciner le Si dopé P/SiO₂ revêtu à l'azote pour obtenir un matériau composite Si dopé P/SiO₂ qui est revêtu de C dopé N ; et
attaquer, à l'aide d'une solution d'acide fluorhydrique, le matériau composite Si dopé P/SiO₂ qui est revêtu de C dopé N, pour obtenir un matériau composite Si dopé P qui est revêtu de C dopé N.

6. Procédé de préparation selon la revendication 5, **caractérisé en ce que** la source de phosphore est au moins l'un sélectionné parmi P₂O₅, NaH₂PO₂, l'acide phytique et la triphénylphosphine ; et la source d'azote est au moins l'un sélectionné parmi le pyrrole, la mélamine, l'urée et la dopamine, **caractérisé en ce qu'**un rapport massique entre le SiO et la source de phosphore est de (5 à 50):1.

7. Procédé de préparation selon la revendication 5, **caractérisé en ce que**, durant la calcination du produit issu du bon mélange de SiO et de la source de phosphore, une température de calcination est de 500 °C à 1200 °C, une durée de calcination est de 1 à 10 heures, et la calcination est réalisée sous atmosphère inerte, **caractérisé en ce qu'**un rapport d'une quantité de substance de la source d'azote à une masse des particules composites de Si dopé P/SiO₂ est de (0,001 à 0,1) mmol:100 mg.

8. Procédé de préparation selon la revendication 5, **caractérisé en ce que** l'application d'une source d'azote en tant que revêtement sur des surfaces des particules composites de Si dopé P/SiO₂ comprend les étapes consistant à : ajouter les particules composites de Si dopé P/SiO₂ et un tensioactif dans de l'eau ; ajouter une solution de dispersion de source d'azote et un initiateur dans cet ordre en conditions d'agitation continue et en bain de glace après que le tensioactif se soit dissous ; et conserver sous vibration en conditions de bain de glace, **caractérisé en ce qu'**une concentration de la solution de dispersion de source d'azote est de 0,01 à 1 mol/L.

9. Procédé de préparation selon la revendication 5, **caractérisé en ce que**, durant la calcination du Si dopé P/SiO₂ revêtu à l'azote, une température de calcination est de 200 °C à 800 °C, une durée de calcination est de 1 à 5 heures, et la calcination est réalisée sous atmosphère inerte.

10. Procédé de préparation selon la revendication 5, **caractérisé en ce qu'**un pourcentage massique de la solution d'acide fluorhydrique est de 5 % en poids à 50 % en poids, **caractérisé en ce qu'**une durée d'attaque est de 5 à 60 minutes.

11. Matériau d'électrode négative, **caractérisé en ce que** le matériau d'électrode négative comprend un matériau composite à structure cœur en jaune d'œuf-écorce selon l'une quelconque des revendications 1 à 4 ou un matériau composite à structure cœur en jaune d'œuf-écorce préparé par le procédé de préparation selon l'une quelconque des revendications 5 à 10.

12. Batterie rechargeable (5), **caractérisée en ce que** la batterie rechargeable (5) comprend le matériau d'électrode négative selon la revendication 11.

13. Module de batterie (4), **caractérisé en ce que** le module de batterie (4) comprend la batterie rechargeable (5) selon la revendication 12.

14. Bloc-batterie (1), **caractérisé en ce que** le bloc-batterie (1) comprend le module de batterie (4) selon la revendication 13.

15. Dispositif électrique, **caractérisé en ce que** le dispositif électrique comprend au moins l'un du matériau d'électrode négative selon la revendication 11, de la batterie rechargeable (5) selon la revendication 12, du module de batterie (4) selon la revendication 13 ou du bloc-batterie (1) selon la revendication 14.
